# EUROPEAN PATENT SPECIFICATION

(11) **EP 3 506 609 B1**
(45) Date of publication and mention of the grant of the patent: **07.10.2020**
(21) Application number: 18214732.2
(22) Date of filing: 20.12.2018
(51) Int. Cl.: H04M 1/04, A45F 5/00

(54) **PORTABLE MULTIMEDIA EQUIPMENT GRIPPING DEVICE**
GREIFVORRICHTUNG FÜR TRAGBARE MULTIMEDIAAUSRÜSTUNG
DISPOSITIF DE PRÉHENSION D'ÉQUIPEMENT MULTIMÉDIA PORTABLE

(30) Priority: 21.12.2017 IT 201700148035
(43) Date of publication of application: 03.07.2019
(73) Proprietor: De Roma, Angelo, 43122 Parma (IT); Rizzo, Cristian, 43123 Parma (IT)
(72) Inventor: De Roma, Angelo, 43122 Parma (IT); Rizzo, Cristian, 43123 Parma (IT)
(74) Representative: Vanosi, Adelio Valeriano

(56) References cited:
- EP-A1- 3 173 896
- FR-A1- 3 041 223
- US-A1- 2015 341 069

## Description

### FIELD OF THE INVENTION

The present invention relates to a portable multimedia equipment gripping device.

In particular, the invention relates to a device for holding portable multimedia equipment (such as a smartphone, tablet, eBook, eReader, etc.) when taking photographs of oneself ('selfies') or more generally during use thereof.

### BACKGROUND ART

Smartphones and tablets were created and developed as an evolution of mobile phones, mainly from the need for a keyboard for writing, and were subsequently supplemented with multimedia contents accessible in touchscreen mode. The design has therefore evolved towards optimisation of this function, together with increased screen size, while meeting portability needs through a reduction in thickness. Today's users therefore find themselves supplied with equipment with screens of a non-negligible size, which are increasingly thinner, and are very comfortable and easy to handle in certain situations of use, but equally uncomfortable and unstable in other - increasingly frequent - conditions.

Alongside the technological evolution in terms of the viewing and writing functions offered by smartphones and tablets, we are witnessing a continuous, remarkable improvement in the photographic capacity thereof, in response to the needs of the new social web platforms.

While the drive towards ever flatter and lighter product designs has managed to coexist with the photographic possibilities of the equipment in terms of the more classic "aim and snap" concept, such design has not necessarily evolved to the increasingly important needs during photographic use to produce "selfies".

In the present document, the term "selfie" means a photograph taken of oneself, generally with a smartphone or tablet, for example by holding the device with one hand.

The large but thin design of conventional smartphones and tablets makes taking a selfie awkward and unbalanced with real limits of manoeuvrability and consequent risks of losing one's grip on the device, causing the latter to fall and consequently suffer damage. Consequently, the act of "aiming and snapping" in selfie mode is, nowadays, often increasingly slow, awkward, and complex.

At present, a selfie is taken by gripping the device while leaving one finger free to activate the snap button or the automatic timer: this gesture is often difficult and unnatural because it is not easy to keep the device in position and at the same time have a finger free to take the snap, so that one is relaxed and accurate when touching the capacitive screen. This limit restricts selfie-taking to particularly static operating conditions, while preventing the action being carried out in dynamic or sporting situations. 11

Documents EP 3173896 A1 and FR 3041223 A1 disclose cases for mobile devices that comprise slidable holders meant to increase comfort of the user.

### SUMMARY OF THE INVENTION

The object of the present invention is to provide a device which is capable of guaranteeing a steady grip in any viewing mode and at the same time managing multimedia content, in particular in the selfie mode, and which offers safe and fast manoeuvrability during the gesture on the one hand and, on the other hand, meets portability and size needs when not in use.

A further object of the invention is to provide a device which can act as a support, when one wishes to rest the telephone sideways on a surface.

This and other objects are achieved by means of a portable multimedia equipment gripping device as defined by the appended claims.

### BRIEF DESCRIPTION OF THE FIGURES

Further characteristics and advantages of the invention will become clearer in the description of a preferred but not exclusive embodiment of the device, illustrated - by way of a non-limiting example - in the drawings annexed hereto, in which:
Figures 1 to 4 show an operating sequence of the device according to the present invention;
Figure 5 shows the device with certain parts in a cut-away view in order to show the structure thereof;
Figure 6 is a simplified longitudinal section of the device;
Figure 7 is an enlargement of a detail in Figure 6;
Figure 8 is an enlargement of a detail of the device in Figure 4;
Figure 9 is a detail of the device in Figure 4;
Figure 10 is an alternative embodiment of the device according to the present invention; and
Figure 11 show a cross section of a variant of the embodiment of figure 10.

### DETAILED DESCRIPTION OF THE INVENTION

With reference to the figures stated, reference number 1 is used to denote, as a whole, a portable multimedia equipment gripping device.

In the present document, the term "portable multimedia equipment" means a smartphone, tablet or eReader (e.g. "kindle") and suchlike, with or without a phone mode (with a screen size of less than or equal to 11 inches), preferably incorporating at least one camera. Hereinafter the term 'smart device' will also be used to define the equipment stated above.

The device according to the present invention may be integrated in a case or external structure of a smart device, or in a cover designed to be stably associated with the said smart device.

As can be seen from the drawings, the gripping device 1 comprises a pocket 2, inside which a slide 3 is slidably movable, onto which a support 4 is hinged.

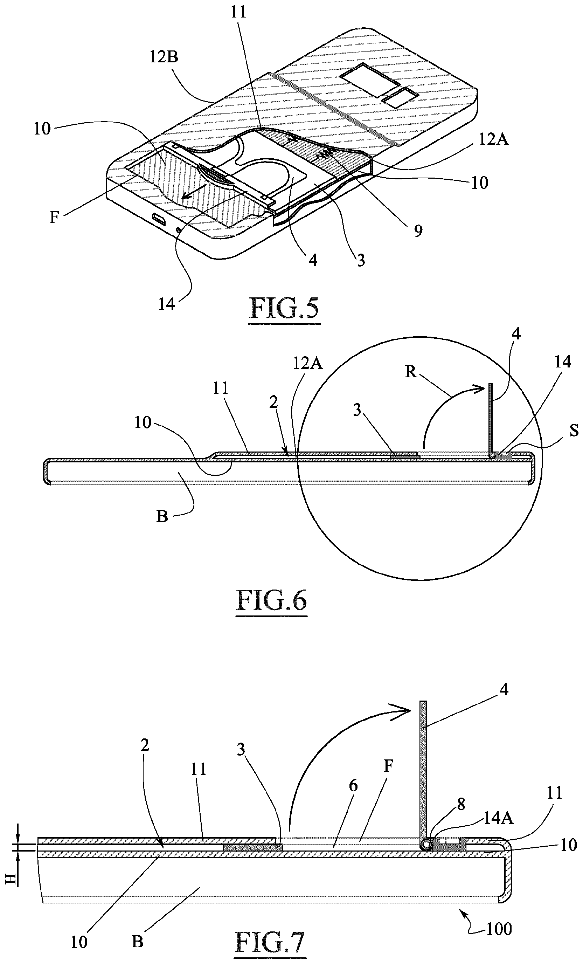

The pocket 2 is clearly visible in the section of Figure 7. In the embodiment disclosed herein, the device may be associated directly with a smart device cover 100. In this regard, the cover includes edges B to stably secure the said cover to the mobile phone, in a completely conventional manner.

As can be seen from the section view, the pocket 2 can be defined by a bottom wall 10, which - during use - rests on the rear part (opposite the screen) of the smart device, and a raised wall 11, which extends from the bottom wall 10 so as to form a compartment defining the pocket 2.

On the bottom wall, windows F1, F2 can be provided, spaced apart from pocket 2, in order to expose a camera lens of the smart device, and possibly the flash. The device 1 can therefore be positioned in the lower half of the cover (i.e. the lower half of the smart device) and this promotes the ergonomics of the handle, as will be described later.

The pocket 2 can be delimited laterally by a first and a second side wall 12A, 12B (Figure 5), which - in practice - connect the bottom wall 10 to the raised wall 11.

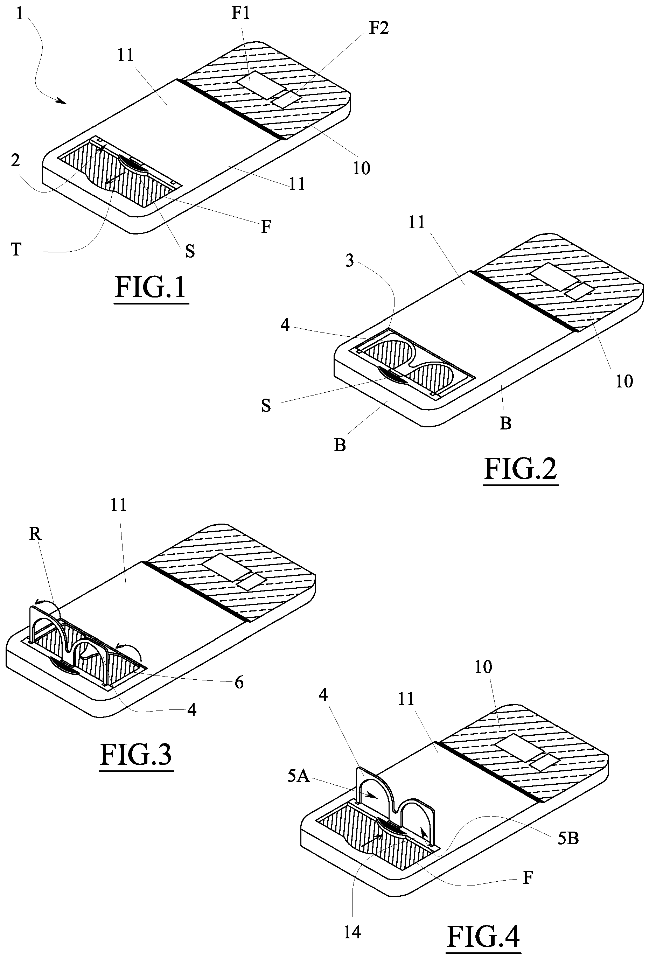

In the configuration described, the raised wall 11 may feature a window F whose dimensions enable the support 2 to be raised into an operating position thereof (Figures 2, 3, and 4), which will be described later. In the example described, the window F is rectangular, positioned in the lower part of the cover (corresponding to the lower part also of the device) and is slightly narrower than the cover (or device).

The support 4 features at least one first opening 5A, 5B to house a user's finger, but preferably a second opening 5B is also present. The openings are preferably isolated from one other and configured to house two of a user's fingers separately.

Specifically the at least one first opening 5A, is configured like a hole where a finger can be inserted so that the finger may pass through the opening (like when a ring is fitted on a finger). Therefore the opening has a circumference length that may be comparable to the maximum circumference of a user finger. In the present description the term 'circumference' is used, even if the opening may have a shape that is different from a circle.

According to the invention, the support 4 is movable, with respect to the slide 3, between at least one lowered position, in which the support is folded inside a seat 6 in the slide - so as to be completely contained within the thickness H thereof (Figure 2) - and an operating position (Figures 3 and 4), in which the support 4 is angled with respect to the slide 3 and protrudes with respect thereto. Preferably the angle is approximately 90°.

Between the slide 3 and the support 4, a first elastic element 8 may be provided, which is configured to push (with a snap-fit mechanism) the support from the said lowered position towards the said operating position when the support 4 is completely outside the pocket 2 (Figure 2), i.e. the support is centred with respect to the window F in the raised wall 11.

Moreover, the slide 3 is associated with a second elastic element 9 which pulls the slide 3 back into the pocket 2.

In this way, the slide 3 can be pulled counter to the second elastic element 9, for example by means of an optional groove S in which a user can, for example, insert a fingernail up to the position in Figure 2, when a projection 14 on the slide is abutting with an edge 14A of the raised wall 11, or other stop.

In this position, the support 4 is completely extracted from the pocket (facing the window F); immediately afterwards, as the raised wall 11 of the pocket 2 is no longer holding the support 4 in the lowered position, the first elastic element 8 pushes the latter so that it moves up and out of the slide (arrows R, figure 3), making the said element snap-fit into the raised position, until it reaches a stop integrated into the slide (preferably on the projection 14).

At this point, upon releasing the traction on the slide 3, the latter is pulled back by the second elastic element 9 into the pocket, until the projection 14 is abutting with the edge of the window F (or of the pocket 2).

In this configuration, the support 4 is in a stable position and can be used to grip the smart device (for example to take a selfie) by inserting (sliding) two fingers into the openings of the support 4 (for example, the index finger and the middle finger, with the bottom edge of the device resting on the palm of the hand). The thumb, in this condition, is free.

Obviously, this configuration is not only useful for taking selfies, but in any case of use of multimedia content in general, such as videos, ebooks, articles, web pages, etc. In particular, when the screen is positioned horizontally, the page can be viewed in maximum width and therefore, for example, with larger font sizes.

Furthermore, in the configuration shown in Figure 4, the support 4 can provide a support point which allows the device to remain in a slightly semi-vertical/oblique position with respect to any rigid support surface, which is useful for both taking selfies in timer (countdown) mode and viewing multimedia contents on the screen.

Once the support 4 is no longer necessary, the user simply pulls the slide out of the pocket again, and, after pushing the support 4 into the lowered position, allows the slide to automatically close into a protected position, pulled back into in the pocket 2 by the second elastic element.

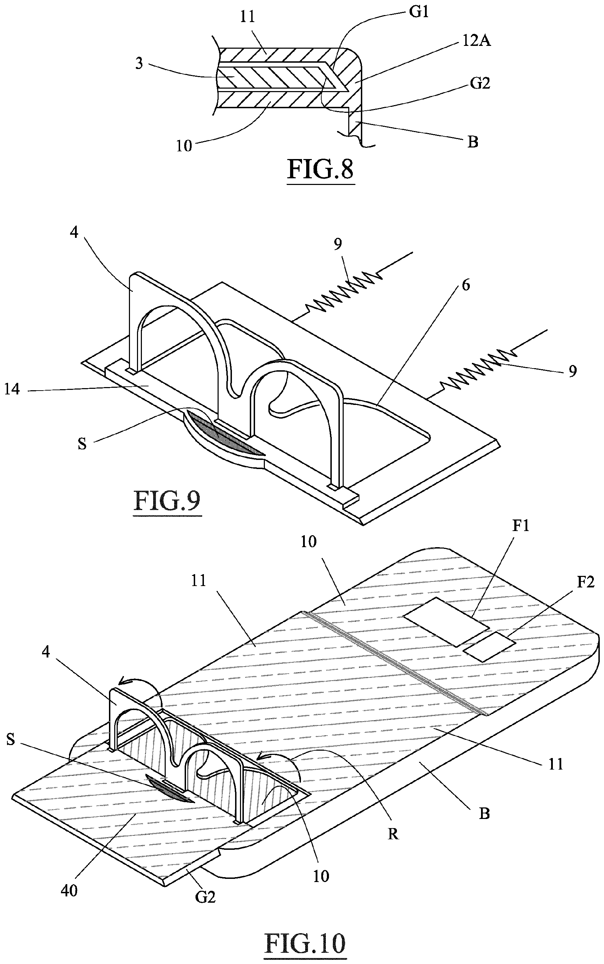

To complete the description, it must be stressed that the (optional) first elastic element 8 may be a torsion spring (or other similar device), while the second elastic element 9 may comprise at least one traction spring (but preferably more than one spring is provided, for example two or three). The springs may be made of metal (harmonic steel) or rigid plastic; they may be a separate part, or they may be obtained directly (for example by moulding) within the pieces making up the slide 3 and/or support 4. To better guide the slide, it is possible for the first and second side walls 12A, 12B to feature guides G1 which engage with counter-guides G2 formed on the slide 3 (see detail in Figure 8).

Furthermore, the slide 3 slides freely over the bottom wall 10.

The support 4, in the position in Figure 4, allows a firm "handheld" grip in any condition of use and for viewing/managing multimedia content, thereby expanding the fields of use to sporting conditions, including up to the most extreme dynamic conditions.

Moreover, as already discussed, the support 4 can support the device when resting on rigid surfaces. This allows the device to "stand up by itself" both in selfie mode and when displaying multimedia content onscreen.

Advantageously, the extraction of the support 4 takes place with a single rapid gesture and the presence of a rigid double ring (on the rear of the cover, opposite the viewing screen used when taking the photo) allows the device to be held firmly with just two fingers, in the palm of the hand, leaving the thumb free to touch the capacitive screen, with the most natural movement thereof, since the thumb is opposable.

The firmer grip on the device allows the user not to worry about losing control of or damaging the device, and to concentrate, among other things, on the operations involved in taking a picture in selfie mode, enjoying the said function fully. The user benefits from this function without being forced into awkward, complex operations, as the mechanism is designed striving for immediacy and ease during both extraction and repositioning.

Advantageously, when integrated into a cover or directly into the smart device, the mechanism remains protected from possible damage by the said pocket 2, so as to guarantee the necessary durability and reliability.

Furthermore, when not in use, the support 4 is housed (with the slide) entirely within the pocket 2. This prevents the smart device getting caught in the pockets of trousers or bags, making the system even more functional. Furthermore, in this condition, the support 4 and the slide 3 are effectively protected from possible impacts.

A different embodiment of the invention is illustrated in Figure 10. In this, the same reference numbers used earlier are used to denote parts that are functionally similar to those already illustrated. They will not, therefore, be described again.

In this configuration, the slide is slidable outside the perimeter of the cover or the smart device. The said slide features a raised panel 40 (at the same level as the raised wall 11) opposite the seat 6. In this way, when the support is closed inside the pocket, the surface of the device has no recess (window F is no longer present), which is wholly beneficial for the aesthetics of the device.

The operation of this embodiment is very similar to the previous one and therefore will not be described.

In both embodiments means may be used to help the opening or the closure of the support 4.

Said means, may cooperate with the support 4 to automatically tilt the support 4 with respect to the slide 3 depending on the position of the slide 3 on the device.

In an example, said means 80, 81, 82, 83 may be magnetic means.

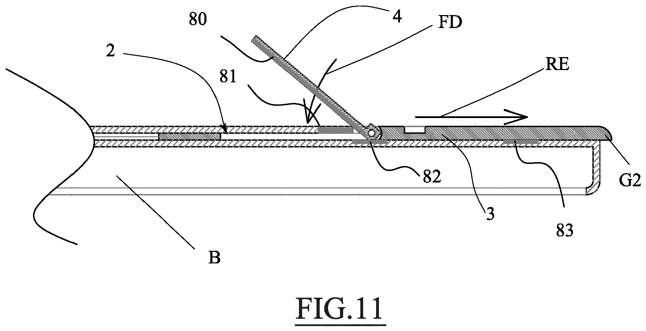

The use of magnetic means is represented in fig. 11, with reference to the embodiment of figure 10. But of course, the magnetic elements may be applied in similar positions also in the embodiment of fig. 1.

As shortly discussed before, attractive magnetic means 82, 80 can be used to keep the support 4 folded on the slide 3, in the lowered position, when the slide 3 is in a first predetermined zone (i.e. before that the slide retracts in the pocket, but when the slide is little distant from its end of stroke position out of the pocket). This makes the closing operation much easier for a user.

To this end, a first magnetic element 80 (i.e. a magnet and/or a ferromagnetic element etc.) may be positioned on the support 4 and a second magnetic element 82 (i.e. a ferromagnetic element and/or a magnet) may be placed at a convenient position on the device 1 (possibly in its frame), in order to obtain the said attractive magnetic effect, possibly only when the slide is in the said first predetermined zone.

Basically, when the slide is in this first predetermined zone, the attractive force between the second magnetic element 82 and the first magnetic element 80 is higher than the opening force of the first elastic element (if present).

Also, a fourth magnetic element 81, for example positioned at the border of the pocket 2, may be used to fold down (arrow FD) the support 4, during a retraction (arrow RE) of the slide 3. In fact, when the support is in open position against the attractive field of the fourth magnetic element 81, may engage the first magnetic element 80, forcing the support 4 to fold down. It is to be noted that, at a certain position, the second magnetic element 82 field may also engage the first magnetic element 80, forcing the support 4 down against the slide 3.

Moreover, repulsive magnetic force may be used to push the support 4 away from the slide 3, in an opening procedure, when during its movement, the slide 3 reaches a second predetermined zone (i.e. at or very close to the end of stroke position, outside of the pocket).

To this end, a third magnetic element 83 (i.e. a magnet) may be placed in a convenient position of the device 1 (possibly on its frame), so that it may interact with the first magnetic element 80 (that in this case must be a magnet also) of the support 4 when the slide 3 is in the said second predetermined zone, in order to raise the support away from the slide 3, thus allowing the full opening of the support 4.

Basically, in this second predetermined zone of the slide 3, the repulsion force between the first 80 and the third magnet 83, added to the opening force of the first elastic element (if present) should be higher than the attraction force between the first magnet 80 and the second 82 and fourth 81 magnetic elements (if one or both of those magnets are present).

It is to be noted, that if the repulsive force is used to open the support 4, the first elastic element may also be not present, as already anticipated. Moreover, if the first elastic element is not present, the presence of the second magnetic element 82 (provided to keep the support folded on the slide, using attractive magnetic force), may also be omitted.

The presence of one or more of the above described magnetic elements, gives to a user the possibility to rise and close the support 4, almost automatically, using a single finger (used only to act on the slide 3) and with a single gesture.

In the previous description, magnetic means are described, to control the tilt of the support 4 depending on the position of the slide 3. Of course, those magnetics means, may be integrated or substituted by mechanical means working in similar way, for example of the snap means, pinion-rack couplings etc.

Various embodiments of the innovation have been disclosed herein, but further embodiments may also be conceived as long as they fall under the scope of invention as defined by the appended claims.

## Claims

1. Gripping device (1) of a portable multimedia device, comprising a pocket (2) inside which slides a slide (3) to which a support (4) is hinged, the support (4) having at least a first opening (5A, 5B) to house at least one finger of a user, the support (4) being movable with respect to the slide (3) between at least one lowered position in which it is folded inside a seat (6) of the slide so as to be completely contained in the thickness of the slide itself, and an operative position in which the support (4) is angled with respect to the slide (3) and protrudes with respect to it, the slide being associated with a second elastic element (9) which recalls the slide (3) inside the pocket (2), the slide (3) having a projection (14) configured to stop against an edge of said pocket (2) and to constitute an end-of-stroke element for the movement of the slide (3) pulled by the second elastic element (9) when the support (4) is angled with respect to the slide and the slide (3) is recalled inside the pocket (2).

2. Gripping device according to the previous claim, wherein a first elastic element (8) is provided between the slide (3) and the support (4) to push the support from said lowered position towards said operating position when the support (4) is completely outside the pocket (2).

3. Gripping device according to the preceding claim, in which the first elastic element (8) is a torsional spring and/or wherein the second elastic element (9) comprises at least one tension spring.

4. Gripping device according to claim 1, wherein the pocket is defined by a bottom wall (10), a raised wall (11), and a first and a second side wall (12A, 12B), and/or wherein the first and second lateral walls comprise guides (G1) which engage with counter-guides (G2) formed on the slide.

5. Gripping device according to claim 1, wherein the slide (3) comprises a groove, to allow extraction of the slide (3) from the pocket.

6. Gripping device according to claim 1, in which the pocket (2) is provided in a cover of a portable telephone device, said cover comprising edges to permanently constrain it to the portable telephone device.

7. Gripping device according to one or more of the preceding claims, in which the raised wall (11) provides a window (F) shaped to allow the support (4) to be raised in the operating position when the support (4) faces the window (F).

8. Gripping device according to one or more of the preceding claims, in which the support (4) comprises a second opening (5B), configured to house two fingers of a user distinctly.

9. Gripping device according to one or more of the preceding claims, wherein it comprises means (80, 81, 82, 83) cooperating with the support (4) to automatically tilt the support (4) with respect to the slide (3) depending on the position of the slide (3) on the device.

10. Gripping device according to the preceding claim wherein said means (80, 81, 82, 83) are magnetic elements.

11. Gripping device according to the preceding claims, wherein an automatic opening of the support (4) is obtained through the repulsive force of a first magnetic element (80) coupled to the support (4) and of a third magnetic element (83) .

12. Gripping device according to claim 11, wherein an automatic closing of the support (4) is obtained through the attractive force of a first magnetic element (80) coupled to the support (4) and of a fourth magnetic element (81) optionally placed at the border of the pocket (2).

13. Gripping device according to claim 11, wherein the support (4) is kept folded on the slide (3), at least in a predetermined position of the slide (3), by the attractive force of the first magnetic element (80) and of a second magnetic element (82).

14. Portable multimedia device, equipped with at least one touch-screen and optionally with a camera, comprising a gripping device according to one or more of the previous claims.

## Patentansprüche

1. Greifvorrichtung (1) einer tragbaren Multimedia-Vorrichtung, umfassend eine Tasche (2), in die ein Schieber (3) gleitet, an dem ein Träger (4) angelenkt ist, wobei der Träger (4) mindestens eine erste Öffnung (5A, 5B) aufweist, um mindestens einen Finger eines Benutzers aufzunehmen, wobei der Träger (4) in Bezug auf den Schieber (3) zwischen mindestens einer abgesenkten Position, in der er in einem Sitz (6) des Schiebers gefaltet ist, um vollständig in der Dicke des Schiebers selbst enthalten zu sein, und einer Betriebsposition, in der der Träger (4) in Bezug auf den Schieber (3) abgewinkelt ist und in Bezug auf diesen hervorsteht, beweglich ist, wobei der Schieber einem zweiten elastischen Element (9) zugeordnet ist, das den Schieber (3) ins Innere der Tasche (2) zurückführt, wobei der Schieber (3) einen Vorsprung (14) aufweist, der konfiguriert ist, um an einer Kante der Tasche (2) anzuhalten und ein Endlagenelement für die Bewegung des Schiebers (3) darzustellen, der von dem zweiten elastischen Element (9) gezogen wird, wenn der Träger (4) in Bezug auf den Schieber abgewinkelt ist und der Schieber (3) ins Innere der Tasche (2) zurückgeführt wird.

2. Greifvorrichtung nach dem vorhergehenden Anspruch, wobei ein erstes elastisches Element (8) zwischen dem Schieber (3) und dem Träger (4) bereitgestellt ist, um den Träger von der abgesenkten Position in Richtung der Betriebsposition zu drücken, wenn der Träger (4) vollständig außerhalb der Tasche (2) ist.

3. Greifvorrichtung nach dem vorhergehenden Anspruch, bei der das erste elastische Element (8) eine Torsionsfeder ist und/oder wobei das zweite elastische Element (9) mindestens eine Zugfeder umfasst.

4. Greifvorrichtung nach Anspruch 1, wobei die Tasche durch eine Bodenwand (10), eine erhabene Wand (11) und eine erste und eine zweite Seitenwand (12A, 12B) definiert ist und/oder wobei die erste und zweite Seitenwand Führungen (G1) umfassen, die mit auf dem Schieber ausgebildeten Gegenführungen (G2) in Eingriff stehen.

5. Greifvorrichtung nach Anspruch 1, wobei der Schieber (3) eine Nut umfasst, um ein Herausziehen des Schiebers (3) aus der Tasche zu ermöglichen.

6. Greifvorrichtung nach Anspruch 1, bei der die Tasche (2) in einer Abdeckung eines tragbaren Telefongeräts bereitgestellt ist, wobei die Abdeckung Kanten umfasst, um sie dauerhaft auf das tragbare Telefongerät einzuzwängen.

7. Greifvorrichtung nach einem oder mehreren der vorhergehenden Ansprüche, bei der die erhabene Wand (11) ein Fenster (F) bereitstellt, das geformt ist, um zu ermöglichen, dass der Träger (4) in der Betriebsposition angehoben wird, wenn der Träger (4) dem Fenster (F) zugewandt ist.

8. Greifvorrichtung nach einem oder mehreren der vorhergehenden Ansprüche, bei der der Träger (4) eine zweite Öffnung (5B) umfasst, die konfiguriert ist, um zwei Finger eines Benutzers eindeutig aufzunehmen.

9. Greifvorrichtung nach einem oder mehreren der vorhergehenden Ansprüche, wobei sie Mittel (80, 81, 82, 83) umfasst, die mit dem Träger (4) zusammenarbeiten, um den Träger (4) in Bezug auf den Schieber (3) abhängig von der Position des Schiebers (3) auf der Vorrichtung automatisch zu kippen.

10. Greifvorrichtung nach dem vorhergehenden Anspruch, wobei die Mittel (80, 81, 82, 83) Magnetelemente sind.

11. Greifvorrichtung nach den vorhergehenden Ansprüchen, wobei ein automatisches Öffnen des Trägers (4) durch die Abstoßungskraft eines ersten Magnetelements (80), das mit dem Träger (4) gekoppelt ist, und eines dritten Magnetelements (83) erreicht wird.

12. Greifvorrichtung nach Anspruch 11, wobei ein automatisches Schließen des Trägers (4) durch die Anziehungskraft eines ersten Magnetelements (80), das mit dem Träger (4) gekoppelt ist, und eines vierten optional am Rand der Tasche (2) angeordneten Magnetelements (81) erreicht wird.

13. Greifvorrichtung nach Anspruch 11, wobei der Träger (4) gefaltet auf dem Schieber (3) zumindest in einer vorbestimmten Position des Schiebers (3) durch die Anziehungskraft des ersten Magnetelements (80) und eines zweiten Magnetelements (82) gehalten wird.

14. Tragbares Multimedia-Gerät, ausgestattet mit mindestens einem Touchscreen und optional mit einer Kamera, umfassend eine Greifvorrichtung nach einem oder mehreren der vorhergehenden Ansprüche.

## Revendications

1. Dispositif de préhension (1) d'un dispositif multimédia portable, comprenant une poche (2) à l'intérieur de laquelle coulisse une glissière (3) à laquelle est articulé un support (4), le support (4) présentant au moins une première ouverture (5A, 5B) pour loger au moins un doigt d'un utilisateur, le support (4) étant mobile par rapport à la glissière (3) entre au moins une position abaissée dans laquelle il est replié à l'intérieur d'un siège (6) de la glissière de manière à être entièrement contenu dans l'épaisseur de la glissière elle-même, et une position de fonctionnement dans laquelle le support (4) est en oblique par rapport à la glissière (3) et fait saillie par rapport à celle-ci, la glissière étant associée à un deuxième élément élastique (9) qui rappelle la glissière (3) à l'intérieur de la poche (2), la glissière (3) ayant une saillie (14) configurée pour s'arrêter contre un bord de ladite poche (2) et pour constituer un élément de fin de course au mouvement de la glissière (3) tirée par le deuxième élément élastique (9) lorsque le support (4) est en oblique par rapport à la glissière et que la glissière (3) est rappelée à l'intérieur de la poche (2).

2. Dispositif de préhension selon la revendication précédente, dans lequel un premier élément élastique (8) est prévu entre la glissière (3) et le support (4) pour pousser le support depuis ladite position abaissée vers ladite position de fonctionnement lorsque le support (4) est complètement à l'extérieur de la poche (2).

3. Dispositif de préhension selon la revendication précédente, dans lequel le premier élément élastique (8) est un ressort de torsion et / ou dans lequel le deuxième élément élastique (9) comprend au moins un ressort de tension.

4. Dispositif de préhension selon la revendication 1, dans lequel la poche est définie par une paroi inférieure (10), une paroi surélevée (11) et une première et une seconde parois latérales (12A, 12B), et / ou dans lequel les première et seconde parois latérales comprennent des guides (G1) qui viennent en prise avec des contre-guides (G2) formés sur la glissière.

5. Dispositif de préhension selon la revendication 1, dans lequel la glissière (3) comprend une rainure, pour permettre l'extraction de la glissière (3) de la poche.

6. Dispositif de préhension selon la revendication 1, dans lequel la poche (2) est prévue dans un capot d'un dispositif de téléphone portable, ledit capot comprenant des bords pour le contraindre en permanence vers le dispositif de téléphone portable.

7. Dispositif de préhension selon l'une ou plusieurs des revendications précédentes, dans lequel la paroi surélevée (11) fournit une fenêtre (F) profilée pour permettre au support (4) d'être soulevé dans la position de fonctionnement lorsque le support (4) fait face à la fenêtre (F).

8. Dispositif de préhension selon l'une ou plusieurs des revendications précédentes, dans lequel le support (4) comprend une deuxième ouverture (5B), configurée pour loger distinctement deux doigts d'un utilisateur.

9. Dispositif de préhension selon l'une ou plusieurs des revendications précédentes, dans lequel il comprend un moyen (80, 81, 82, 83) de coopération avec le support (4) pour incliner automatiquement le support (4) par rapport à la glissière (3) en fonction de la position de la glissière (3) sur le dispositif.

10. Dispositif de préhension selon la revendication précédente, dans lequel ledit moyen (80, 81, 82, 83) est constitué d'éléments magnétiques.

11. Dispositif de préhension selon les revendications précédentes, dans lequel une ouverture automatique du support (4) est obtenue par la force de répulsion d'un premier élément magnétique (80) couplé au support (4) et d'un troisième élément magnétique (83).

12. Dispositif de préhension selon la revendication 11, dans lequel une fermeture automatique du support (4) est obtenue par la force d'attraction d'un premier élément magnétique (80) couplé au support (4) et d'un quatrième élément magnétique (81) éventuellement placé au bord de la poche (2).

13. Dispositif de préhension selon la revendication 11, dans lequel le support (4) est maintenu plié sur la glissière (3), au moins dans une position prédéterminée de la glissière (3), par la force d'attraction du premier élément magnétique (80) et d'un deuxième élément magnétique (82).

14. Dispositif multimédia portable, équipé d'au moins un écran tactile et éventuellement d'une caméra, comprenant un dispositif de préhension selon l'une ou plusieurs des revendications précédentes.
